Europäisches Patentamt

European Patent Office

Office européen des brevets

(11) Publication number: **0 398 766 B1**

## EUROPEAN PATENT SPECIFICATION

(45) Date of publication of patent specification: **10.05.95**  (51) Int. Cl.6: **B01D 53/66**, C02F 1/70

(21) Application number: **90305508.5**

(22) Date of filing: **21.05.90**

(54) **Ozone decomposing.**

(30) Priority: **19.05.89 JP 127527/89**
**11.12.89 JP 320962/89**
**06.06.89 JP 143380/89**

(43) Date of publication of application:
**22.11.90 Bulletin 90/47**

(45) Publication of the grant of the patent:
**10.05.95 Bulletin 95/19**

(84) Designated Contracting States:
**DE FR GB IT NL**

(56) References cited:
EP-A- 0 186 477    BE-A- 881 318
DE-A- 1 419 682    DE-A- 2 415 452
DE-A- 3 636 250    DE-U- 8 518 123
FR-A- 2 357 297    US-A- 3 779 710

(73) Proprietor: **SAKAI CHEMICAL INDUSTRY CO., LTD.,**
**1, Ebisujimacho 5-cho**
**Sakai**
**Osaka (JP)**

(72) Inventor: **Yoshimoto, Masafumi**
**1, Ebisujimacho 5-chome**
**Sakai,**
**Osaka (JP)**

Inventor: **Nakatsuji, Tadao**
**1, Ebisujimacho 5-chome**
**Sakai,**
**Osaka (JP)**
Inventor: **Nagano, Kazuhiko**
**1, Ebisujimacho 5-chome**
**Sakai,**
**Osaka (JP)**
Inventor: **Yoshida, Kimihiko**
**1, Ebisujimacho 5-chome**
**Sakai,**
**Osaka (JP)**
Inventor: **Tanaka, Masahiro**
**1, Ebisujimacho 5-chome**
**Sakai,**
**Osaka (JP)**

(74) Representative: **Geering, Keith Edwin et al**
**REDDIE & GROSE**
**16 Theobalds Road**
**London WC1X 8PL (GB)**

**Description**

This invention relates to a reactor element for decomposing ozone contained in a fluid such as waste water or waste gas. The invention further relates to a method of decomposing ozone and a method for the regeneration of such a reactor element.

There have been proposed various methods of decomposing noxious ozone contained in the air - for example, an adsorption method wherein porous material is used such as activated carbon or zeolite, and an oxidative decomposition method wherein a catalyst is used such as $MnO_2$.

However, the above known methods of decomposing ozone are not satisfactory. The adsorption method has the disadvantage in that the adsorbent must be regenerated frequently since it is limited in adsorption ability, so that operation is laborious and costly. In the oxidative decomposition method the known catalysts have insufficient ozone decomposition activity and deteriorate very rapidly when used under severe conditions - for example, when a gas which contains a high concentration of ozone is treated or a gas is treated at high space velocity.

FR-A-2357297 discloses elimination of ozone from gas mixtures by contact with granular metal oxide catalyst at elevated reaction temperature. EP-A-0186477 discloses air conditioning heat exchangers having ozone decomposition catalyst on the surface of a warm air inlet. DE-A-2415452 and DE-U-G8518123.4 are not concerned with ozone decomposition; the former discloses a catalyst having a coating of catalytic material on a metal substrate which is in the form of a metal strip having plain and corrugated lengths rolled up to provide through-passages for the reactants and products, electric current being passed through the metal strip to heat the catalyst; the latter discloses a filter/catalyst for gases and fluids having a non-metallic synthetic substrate in the form of an open-cell foam or a planar lattice (or a plurality of erposed planar lattices) with the foam cells or lattice apertures providing through-passages for gas/fluid and having a catalytic metal coating, Fig.8 showing a generalised such filter/catalyst between electrodes for electrifying the filter/catalyst to heat it. DE-A-3636250 also does not mention ozone decomposition; it discloses removing gaseous impurities from waste or exhaust gas by oxidation in an oxygen-containing flow over a heated metal, metal oxide or ceramic catalyst, the catalyst being periodically regenerated in an oxygen-containing flow at an elevated but lower temperature.

The invention provides an improved ozone decomposition process and reactor element and a method of regenerating such a reactor element.

An ozone decomposing reactor element according to the invention comprises

(a) a catalyst structure comprising a substrate of an air-permeable fibrous sheet which carries thereon or therein ozone decomposition catalyst in an amount of 50-250% by weight based on the air-permeable fibrous sheet and electroconductive material in the form of powder, fibre or whisker in an amount such that the catalyst structure can be heated by electrification; and

(b) electrodes attached to the catalyst structure for electrifying the structure to decompose ozone at elevated temperature.

The fibrous sheet substrate may be woven or nonwoven; it may be composed of organic fibers such as polyester fibers, polyamide fibers or polyolefin fibers, or inorganic fibers such as glass fibers, silica fibers, alumina-silica fibers or carbon fibers, or a mixture of two or more thereof.

It is preferred that the fibrous sheet used be resistant to a high temperature of more than $100°C$, most preferably of more than $150°C$; it preferably has high processability since the fibrous sheet is very often formed into and used as corrugated sheets. It is preferred that the fibrous sheet has an air-permeability of from 100 ml/cm$^2$.sec. to 50 1/cm$^2$.sec., when an ozone containing fluid is to be passed through it; when the air-permeability is less than 100 ml/cm$^2$.sec., the fibrous sheet can have a large ozone decomposition rate, but a large pressure loss results; when the air-permeability is more than 50 l/cm$^2$.sec., there is substantially no pressure loss, but the ozone decomposition rate may be too low. It is preferred that the fibrous sheet used has a void rate of not less than 85%.

Any ozone decomposition catalyst may be used. It may be selected, for example from $MnO_2$, $MoO_3$, $CuO$, $Fe_2O_3$, $Ag_2O$, $NiO$, $Co_3O_4$, $WO_3$, $V_2O_5$, $SnO_2$, Pt and Pd. These catalysts may be used singly or as a mixture of two or more.

There may be used as a catalyst, for example a binary catalyst such as $MnO_2/TiO_2$, $MnO_2$/alkali metal oxide or $MnO_2$/alkaline earth metal oxide, or a zeolite catalyst composed of a zeolite having a metal oxide whose oxide formation enthalpy - $\Delta H°f$ is not more than 100 kcal (418.7 kJ)/g-atom of oxygen.

The electroconductive material used in the invention may be any material of electrical resistance which generates heat when electrified. Thus, there may be used as such an electroconductive material, for example, graphite, carbon fibers, silicon carbide, silver, nickel-chromium alloy, chromium-aluminum alloy or stainles steel. The carried electroconductive materials may be in the form powder, whisker or fiber.

A catalyst structure composed of a fibrous sheet carrying catalyst and electoconductive material therein or thereon will be first described.

The catalyst is supported on the fibrous sheet as a carrier together with electroconductive material to form a catalyst structure. The fibrous sheet may have the catalyst and electroconductive material evenly dispersed throughout the sheet or evenly supported on the surface thereof as a thin layer. The former is in particular applicable to the production of the catalyst structure using a nonwoven fibrous sheet as a carrier, whereas the latter is applicable to the production of the catalyst structure using either a nonwoven or a woven fibrous sheet as a carrier. The sheet may be loaded by immersion or wash coat methods; in one immersion method, the fibrous sheet is immersed in a solution of catalyst precursor to impregnate the fibrous sheet with the solution, and is then dried and calcined to convert the precursor into the catalyst. The precursor may be a water soluble compound, for example, manganese acetate, which is converted into manganese oxides by being heated. In a wash coat method, the fibrous sheet is immersed in a slurry of catalyst and is then dried to provide a catalyst structure.

The fibrous sheet preferably has the electroconductive material supported thereon in an amount of about 20-60 % by weight based on the fibrous sheet. When the amount is less than about 20 % by weight, the fibrous sheet may remain too insulative to be adequately heated when electrified, whereas when the amount is more than about 60 % by weight, effective contact of ozone with the catalyst may be prevented to give poor ozone decomposition rate.

The fibrous sheet suitably carries 50-250 weight % of catalyst based on the fibrous sheet. Using more than 250 % by weight may give no special advantage and is rather undesirable from the economical standpoint; when the amount of the catalyst supported on the fibrous sheet is less than 50 % by weight the ozone decomposition activity may be too low.

When the immersion or wash coat method is employed to support the catalyst on a carrier, a fibrous material may also be applied. Any fibers may be used provided that they are resistant to ozone and are readily supported on the carrier. The fibers may have a large length/diameter ratio such as mullite ceramic fibers, C or E glass fibers or stainless steel fibers; or a small length/diameter ratio such as potassium titanate fibers or silicon carbide whiskers. However, from the standpoint of easiness of supporting and useful synergistic effect of catalytic decomposition and mechanical decomposition of ozone with fibers, the fibers preferably have a length of 0.1-20 $\mu$m and a length/diameter ratio of 10-1000 when supported on a carrier. The fibers are preferably present in an amount of 2-20 % by weight based on the materials supported on the carrier. When the amount of the fibers is more than 20 % by weight, they may be unevenly supported and prevent effective decomposition of ozone with the catalyst.

The invention is illustrated by way of example by the following description of embodiments to be taken in conjunction with the accompanying drawings, in which :

Fig.1 is a plan view of an embodiment of a reactor element of the invention;

Fig.2 is a longitudinal section of an ozone decomposing reactor of the invention;

Fig.3 is a perspective illustration of a corrugated reactor element of the invention;

Fig.4 is a longitudinal section of a further ozone decomposing reactor of the invention;

Fig.5 is a longitudinal section of a still further ozone decomposing reactor of the invention; and

Fig.6 is a perspective illustration of a further reactor of the invention.

Herein, the term "catalyst" means active components which have ozone decomposition activity. The catalyst is usually supported on a carrier to form a catalyst structure together with other additives for practical use. These structures are referred to as catalyst structures.

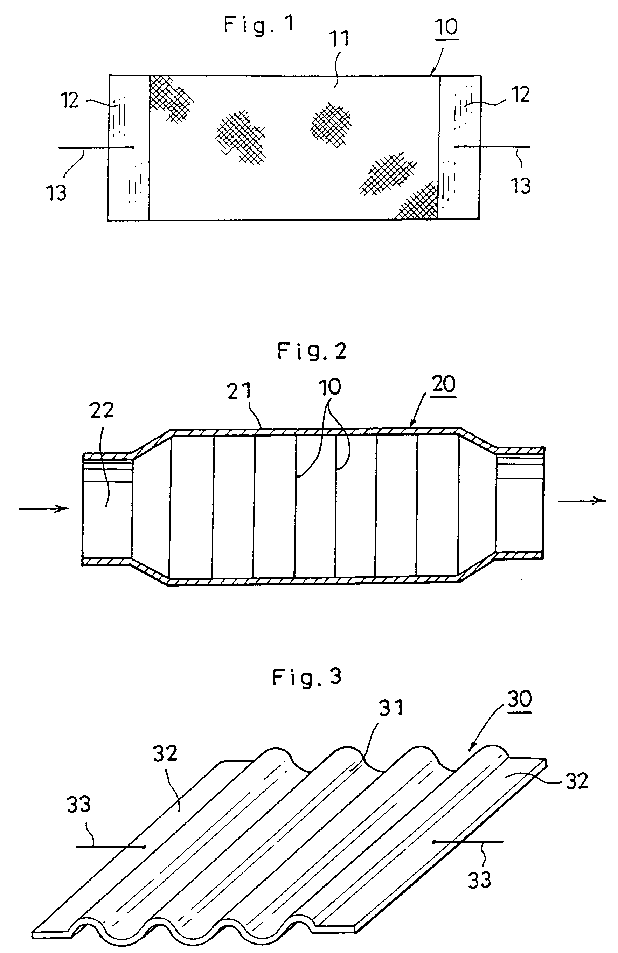

Fig. 1 illustrates a reactor element according to the invention. It includes a catalyst structure 10 composed of a permeable fibrous sheet 11 having catalyst and electroconductive material supported thereon. The catalyst structure is illustrated as a rectangular sheet and has a pair of electrodes 12 attached to opposite sides. Each electrode has a lead wire 13 to be connected to a power source so that the catalyst structure 10 can be electrified and heated.

Fig. 2 shows an ozone decomposing reactor of the invention using reactor elements of Fig. 1. The reactor 20 has an insulative casing 21 which has an axial passage 22 for passing an ozone containing fluid therethrough. The reactor has a plurality of said elements with catalyst structures 10 extending across the passage 22 and spaced parallel to each other. The fluid is forced to pass through the catalyst structures 10 to bring ozone into contact with the catalyst while the structures are heated by electrification via the electrodes 12 (not shown).

Fig.3 illustrates another reactor element with a corrugated catalyst structure 30 of corrugated permeable fibrous board 31 and electrodes 32 attached to opposite sides.

Each electrode has a lead wire 33 to be connected to a power supply.

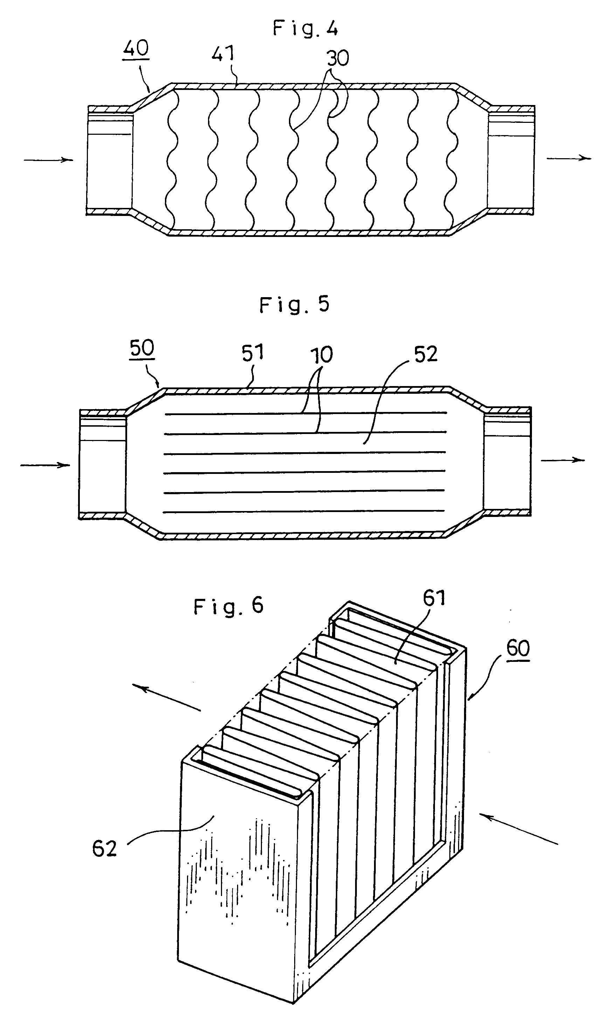

Fig.4 illustrates a reactor 40 wherein the Fig.3 elements are arranged in a casing 41 in the same manner as in Fig.2.

In operating the reactor, the catalyst structure is electrified so that it is heated while a fluid which contains ozone therein is forced to pass through the catalyst structures to contact the catalyst so that ozone is catalytically decomposed at elevated temperature.

Fig.5 illustrates a further reactor 50 of the invention, in which a plurality of the reactor elements of Fig.1 are disposed in a casing 51 parallel to each other along the axis of the reactor to form passages 52 between the catalyst structures 10.

When this reactor is used an ozone containing gas is passed through the passage 52 of the casing along and in contact with the catalyst structures electrified via electrodes 12 (not shown), so that ozone is catalytically decomposed at elevated temperature.

Fig.6 shows a reactor 60 which has a reactor element with a permeable catalyst structure 61 folded like bellows in a casing 62. An ozone-containing fluid is forced to pass through the structure as shown by arrows, while the bellows is electrified via electrodes (not shown).

The ozone decomposition may be carried out at a temperature of e.g. not less than 20°C, preferably at a temperature of 30-90°C. When the reaction temperature is less than about 20°C, high valency oxides produced by the reaction of ozone and the catalyst may not be decomposed and oxygen may accumulate in the catalyst structure, to reduce the ozone decomposition rate of the reactor.

The reaction temperature at which no such reduction of reaction rate takes place depends upon the catalyst used and the amount of ozone put into contact with unit amount of the catalyst per unit time. In this regard, it is useful to determine the reaction temperature based on a CA value. The CA value is herein defined as the product of ozone concentration (ppm) at an inlet of a reactor and area velocity of waste gas introduced into the reactor, and the area velocity is defined as the value of space velocity ($h^{-1}$) of the gas divided by gas contact area per unit volume ($m^2/m^3$) of catalyst structure. For example, when a waste gas is treated at a CA value of 100000 with a catalyst of $MnO_2$, the reaction is carried out at 60°C. When a binary catalyst of $MnO_2$(80 % by weight)/$Ag_2O$ (20 % by weight) is used, the reaction is carried out at 55°C, while a ternary catalyst of $MnO_2$ (70 % by weight)/$Ag_2O$ (10 % by weight)/$TiO_2$ (20 % by weight) is used, the reaction is carried out at 40°C. Meanwhile, when a waste gas is treated at a CA value of 1000 with the catalysts as above, the reaction may be carried out at temperatures of 55°C, 50°C and 35°C, respectively.

The ozone decomposition rate is dependent upon area velocity under fixed reation temperatures and ozone concentrations, but it varies also depending upon the air permeable carrier material used and its air permeability, and the manner in which the catalyst material is disposed in the casing. More specific description will be given in Examples hereinafter.

As set forth above, the reactor of the invention contains an electroconductive material so that it is electrified and ozone is put into contact with the catalyst at elevated temperatures; ozone can be decomposed at a high rate while the catalyst retains its high activity over a long period even under severe reaction conditions.

As a further aspect of the invention, there is provided a method of regenerating any ozone decomposing reactor element as hereinbefore described, which comprises: electrifying and heating the catalyst structure to elevated temperature to regenerate the catalyst.

The catalyst structures are preferably used at a temperature of not less than about 20°C, as hereinbefore set out. However, it is still often found that the ozone decomposition rate reduces with time when ozone decomposition reaction is carried out at about 20°C. It may be necessary for some reason that the reaction be carried out at lower temperatures, where the more severe the reaction conditions, the more rapidly the decomposition rate reduces.

However, in accordance with the invention, the catalyst structure is regenerated by electrifying and heating the deactivated catalyst structure at temperatures preferably of not less than about 40°C, more preferably of not less than about 50°C, and most preferably of not less than about 70°C. The higher the temperature at which the catalyst structure is regenerated, the higher the ozone decomposition rate attained, so that decomposition can be carried out over a longer period before the catalyst structure is again deactivated to a predetermined level of activity.

The invention will now be described in more detail in the following Examples, but it is not limited thereto.

Example 1

An amount of 50 g of a ternary catalyst of $MnO_2$ (70 % by weight)/$Ag_2O$ (10 % by weight)/$TiO_2$ (10 % by weight) having a specific surface area of 32 $m^2/g$ and an average particle size of 50 $\mu$m, 100 g of silica sol, 50 g of graphite powder and water were admixed together to provide an aqueous slurry having a solid content of 100 g/l.

A glass cloth ($L_{55}$ FT 10000 from Unitica M Glass K.K.) having an air permeability of 30 l/cm²•sec. of 30 mm x 35 mm was immersed in the slurry, and was then air-dried, to provide a catalyst structure. The catalyst was found to be supported in an amount of 146 % based on the fibrous sheet.

A pair of copper electrodes were attached to the opposite sides of 35 mm length of the fibrous sheet as illustrated in Fig.1. The catalyst structure was found to have a resistance of 210 Ω.

Seven catalyst structures were disposed in a casing as illustrated in Fig. 2 at a fixed distance so that the distance from the first to the seventh structure was 70 mm, thereby to provide a reactor having a gas contact area of 100 m²/m³.

Example 2

A ceramic fibrous sheet (weight 90 g/m² and thickness 5 mm, from Oriental Asbestos K.K.) of 30 mm x 35 mm was immersed in the same slurry as in Example 1, and was then air-dried, to provide a catalyst structure having the catalyst supported in an amount of 125 % based on the fibrous sheet. The catalyst structure was found to have a resistance of 193 Ω.

The activity of the reactor was measured as follows.

Air was introduced into an ozone generator so that the air contained ozone in a predetermined concentration, and then the air was sent to the reactor while the reactor was electrified. The ozone concentrations in the air at the inlet and the outlet of the reactor were analyzed with an ozone analyzer. Ozone decomposition rate (%) was calculated based on an expression: $[(C_1-C_2)/C_1]$ x 100, wherein $C_1$ is ozone concentration at the inlet and $C_2$ is ozone concentration at the outlet. The results are shown in the Table 1.

TABLE 1

| | Temperature (°C) | | Ozone Concentration at Inlet of Reactor (ppm) | CA Value | Ozone Decompositon Rate (%) | | |
|---|---|---|---|---|---|---|---|
| | Catalyst Structure | Gas at Outlet of Reactor | | | Initial | After 100 h | After 1000 h |
| Example 1 | 20 | 20 | 1000 | 10000 | 82.5 | 35.6 | 9.5 |
| | 30 | 21 | 1000 | 10000 | 88.9 | 70.4 | 32.5 |
| | 40 | 23 | 1000 | 10000 | 97.3 | 90.2 | 59.6 |
| | 50 | 28 | 1000 | 10000 | 98.8 | 98.9 | 98.9 |
| Example 2 | 20 | 20 | 1000 | 10000 | 80.6 | 28.4 | 6.7 |
| | 30 | 21 | 1000 | 10000 | 86.3 | 64.5 | 31.3 |
| | 40 | 23 | 1000 | 10000 | 97.2 | 88.7 | 53.9 |
| | 50 | 28 | 1000 | 10000 | 98.5 | 98.4 | 98.5 |

As apparent from the Table 1, the higher the temperature of the catalyst structure, the higher the ozone decomposition rate and the more durable the catalyst structure.

6

Example 3

There was prepared air which contained 1000 ppm of ozone and the air was passed through the same reactor as in Example 1 at a CA value of 10000 at 20°C. The ozone decomposition rate was measured every ten hours. The results are shown under the column of the catalyst "as prepared". The longer the period over which the ozone decomposition was carried out, the more the catalyst was deactivated.

As a separate experiment, the same reactor as in Example 1 was electrified and heated to 50°C every ten hours to regenerate the catalyst. The results are shown in Table 2. The catalyst was regenerated to have an activity of more than 99 % every ten hours.

TABLE 2

| Reaction Time (h) | Ozone Decomposition Rate (%) | | |
|---|---|---|---|
| | As Prepared | Before Heating | After Heating |
| 0 | 82.4 | 82.3 | |
| 10 | 77.5 | 77.8 | 99.2 |
| 20 | 72.7 | 77.9 | 99.2 |
| 30 | 67.0 | 78.8 | 99.2 |
| 40 | 62.5 | 77.5 | 99.1 |
| 50 | 57.3 | 78.8 | 99.2 |
| 60 | 52.3 | 78.3 | 99.2 |
| 70 | 47.3 | 78.3 | 99.2 |
| 80 | 42.9 | 77.5 | 99.1 |
| 90 | 38.1 | 78.3 | 99.2 |
| 100 | 34.9 | 78.1 | 99.2 |

**Claims**

1. An ozone decomposing reactor element which comprises
   (a) a catalyst structure (10,30,60) comprising a substrate of an air-permeable fibrous sheet (11,31) which carries thereon or therein ozone decomposition catalyst in an amount of 50-250% by weight based on the air-permeable fibrous sheet and electroconductive material in the form of powder, fibre or whisker in an amount such that the catalyst structure can be heated by electrification and
   (b) electrodes (12,32) attached to the catalyst structure for electrifying the structure to decompose ozone at elevated temperature.

2. An element according to claim 1 wherein the air-permeable fibrous sheet (11,31) carries thereon or therein from 20 to 60% by weight of said electroconductive material based on the air-permeable fibrous sheet.

3. An element according to claim 1 or 2 wherein the fibrous sheet is a corrugated fibrous sheet (31).

4. An element according to claim 1 or 2 or 3 wherein the air-permeable fibrous sheet (11,31) has the catalyst and electroconductive material dispersed evenly therethrough or supported on its surface.

5. A method of decomposing ozone contained in a fluid which method comprises contacting the fluid with an ozone decomposition reactor element according to any preceding claim while electrifying and heating the catalyst structure to decompose ozone at elevated temperature.

6. A method according to claim 3 wherein the fluid is passed through or along the catalyst structure.

7. A method of regenerating a used ozone decomposition reactor element according to claims 1 or 3, which method comprises electrifying and heating the the catalyst structure to elevated temperature to regenerate the catalyst.

8. A method according to claim 7 wherein the regeneration is carried out at a temperature of 40-70 °C.

9. A method according to claim 7 or 8 wherein the air-permeable fibrous sheet carries from 20 to 60% by weight of said electroconductive material based on the air-permeable fibrous sheet.

10. A method according to claim 7 or 8 or 9 wherein the air-permeable fibrous sheet has the used catalyst and electroconductive material dispersed evenly therethrough or supported on its surface.

## Patentansprüche

1. Ozonspaltungs-Reaktorelement, welches aufweist
   (a) eine Katalysatorstruktur (10, 30, 60) mit einem Substrat aus einem luftdurchlässigen, faserigen Bogen (11, 31), der in sich oder auf sich einen Ozonspaltungskatalysator in einer Menge von 50 bis 250 Gew.-% bezogen auf den luftdurchlässigen, faserigen Bogen und stromleitendes Material in Form von Pulver, Fasern oder Whiskern in einer Menge trägt, daß die Katalysatorstruktur durch unter Strom setzen geheizt werden kann, und
   (b) Elektroden (12, 32), die an der Katalysatorstruktur zum unter Strom setzen der Struktur angebracht sind, um Ozon bei erhöhter Temperatur zu spalten.

2. Element nach Anspruch 1,
   bei dem der luftdurchlässige, faserige Bogen (11, 31) auf sich oder in sich von 20 bis 60 Gew.-% des stromleitenden Materials bezogen auf den luftdurchlässigen, faserigen Bogen trägt.

3. Element nach Anspruch 1 oder 2,
   bei dem der faserige Bogen ein gewellter faseriger Bogen (31) ist.

4. Element nach Anspruch 1 oder 2 oder 3,
   bei dem der luftdurchlässige, faserige Bogen (11, 31) den Katalysator und das stromleitende Material gleichmäßig in sich verteilt hat oder auf seiner Oberfläche trägt.

5. Verfahren zum Spalten von in einem Fluid enthaltenen Ozon,
   wobei das Verfahren umfaßt ein in Berührung bringen des Fluids mit einem Ozonspaltungs-Reaktorelement gemäß einem der vorhergehenden Ansprüche unter gleichzeitigem unter Strom setzen und Heizen der Katalysatorstruktur, um Ozon bei erhöhter Temperatur zu spalten.

6. Verfahren nach Anspruch 3,
   bei dem das Fluid durch oder entlang der Katalysatorstruktur geführt wird.

7. Verfahren zum Regenerieren eines gebrauchten Ozonspaltungs-Reaktorelements gemäß Anspruch 1 oder 3,
   wobei das Verfahren umfaßt ein unter Strom setzen und Heizen der Katalysatorstruktur auf eine erhöhte Temperatur, um den Katalysator zu regenerieren.

8. Verfahren nach Anspruch 7,
   bei dem die Regeneration bei einer Temperatur von 40 bis 70 °C durchgeführt wird.

9. Verfahren nach Anspruch 7 oder 8,
   bei dem der luftdurchlässige, faserige Bogen von 20 bis 60 Gew.-% des stromleitenden Materials bezogen auf den luftdurchlässigen, faserigen Bogen trägt.

10. Verfahren nach Anspruch 7 oder 8 oder 9,
    bei dem der luftdurchlässige, faserige Bogen den gebrauchten Katalysator und das stromleitende Material gleichmäßig in sich verteilt hat oder auf seiner Oberfläche trägt.

## Revendications

1. Un élément de réacteur de décomposition d'ozone, qui comprend

8

(a) une structure catalytique (10, 30, 60) comprenant un substrat constitué d'une feuille fibreuse perméable à l'air (11, 31) qui porte ou contient un catalyseur de décomposition d'ozone en une quantité de 50 à 250 % en poids sur la base de la feuille fibreuse perméable à l'air et une matière électroconductrice sous la forme de poudre, fibres ou barbes en une quantité telle que la structure catalytique puisse être chauffée par passage de courant électrique ; et

(b) des électrodes (12, 32) attachées à la structure catalytique pour faire passer un courant électrique dans la structure afin de décomposer l'ozone à température élevée.

2. Un élément selon la revendication 1, dans lequel la feuille fibreuse perméable à l'air (11, 31) porte ou contient 20 à 60 % en poids de ladite matière électroconductrice sur la base de la feuille fibreuse perméable à l'air.

3. Un élément selon la revendication 1 ou 2, dans lequel la feuille fibreuse est une feuille fibreuse ondulée (31).

4. Un élément selon la revendication 1, 2 ou 3, dans lequel le catalyseur et la matière électroconductrice sont dispersés uniformément à travers la feuille fibreuse perméable à l'air (11, 31) ou supportés sur sa surface.

5. Un procédé pour décomposer l'ozone contenue dans un fluide, lequel procédé consiste à mettre le fluide en contact avec un élément de réacteur de décomposition d'ozone selon l'une quelconque des revendications précédentes tout en faisant passer un courant électrique dans, et en chauffant, la structure catalytique pour décomposer l'ozone à température élevée.

6. Un procédé selon la revendication 3, dans lequel le fluide est amené à passer à travers la structure catalytique ou le long de celle-ci.

7. Un procédé pour régénérer un élément de réacteur de décomposition d'ozone selon la revendication 1 ou 3 à l'état usé, lequel procédé consiste à faire passer un courant électrique dans la structure catalytique et la chauffer à température élevée pour régénérer le catalyseur.

8. Un procédé selon la revendication 7, dans lequel la régénération est effectuée à une température de 40 à 70°C.

9. Un procédé selon la revendication 7 ou 8, dans lequel la feuille fibreuse perméable à l'air porte ou contient 20 à 60 % en poids de ladite matière électroconductrice sur la base de la feuille fibreuse perméable à l'air.

10. Un procédé selon la revendication 7 ou 8 ou 9, dans lequel le catalyseur usé et la matière électroconductrice sont dispersés uniformément à travers la feuille fibreuse perméable à l'air ou supportés sur sa surface.

Fig. 1

Fig. 2

Fig. 3

Fig. 4

Fig. 5

Fig. 6

11